# EUROPEAN PATENT APPLICATION

(11) **EP 3 543 809 A1**
(43) Date of publication of application: **25.09.2019**
(21) Application number: 19152784.5
(22) Date of filing: 21.01.2019
(51) Int. Cl.: G05B 19/4065

(54) **IMPROVED DIE CUTTING SYSTEM AND TOOL INFORMATION MANAGEMENT SYSTEM THEREFORE**

(30) Priority: 23.03.2018 NL 2020658
(71) Applicant: ALT Technologies B.V., 3565 AK Utrecht (NL)
(72) Inventor: VERSTRAETEN, Jean-Luc Guy, 1215 EB Hilversum (NL)
(74) Representative: Nederlandsch Octrooibureau

(57) **Abstract**

The present invention relates to die cutting, and in particular to a tool information management system for a rotary die cutting system, the rotary die cutting system comprising a die cutting tool, for use in proximity to an anvil roller, having a body with substantially cylindrical outer surface defining a cutting pattern extending outwardly from the surface.
The tool information management system comprises a data member that is fixably attached to a rotary tool of the rotary die cutting system, the data member comprising a data storage medium for storing data and a data communication interface. The tool information management system further comprises a data reader adapted to communicate with the data communication interface of the data member and adapted to retrieve the data stored in the data storage medium of the data member.

## Description

### Field of the Invention

The present invention relates to die cutting, and in particular to a tool information management system for a rotary die cutting system. The present invention further relates to a method of managing tool information using such a tool information management system.

### Background

Such a rotary die cutting system is known in the art comprising a rotary cutting die that is typically a rigid cylindrical body having a cutting blade of a fixed pattern that protrudes outwardly to a uniform distance from the cylindrical circumference. The ultimate edge of the blade pattern either contacts or nearly contacts an adjacent anvil roller, which is typically a smooth, hard, metallic cylinder. The system includes mechanisms for driving the roller die and anvil synchronously, and a structural restraint or frame.

Efforts for managing tool information are reflected in manual systems in which users/operators record information, such as a measure of past usage before returning the die to storage. These manual systems are generally unreliable, users/operators often fail altogether to record usage data, and when such information is recorded, the data format varies according to operator preference. A need exists for improved tool information recording that is independent of operator discretion.

### Object of the Invention

An object of the invention is to provide an improved die cutting system. Another object of the invention may be to provide a tool information management system that is able to provide reliable information. A further object of the invention may be to provide a tool information management system that stores the relevant tool information at the location of the rotary tool.

### Summary of the Invention

This object is achieved by providing a tool information management system for a rotary die cutting system, the rotary die cutting system comprising a die cutting tool, for use in proximity to an anvil roller, having a body with substantially cylindrical outer surface defining a cutting pattern extending outwardly from the surface.

The tool information management system comprises a data member that is fixably attached to a rotary tool of the rotary die cutting system, the data member comprising a data storage medium for storing data and a data communication interface. The tool information management system further comprises a data reader adapted to retrieve the date stored in the data member. Advantageously, a user/operator may directly extract any relevant information from the data member attached to the rotary tool using the data reader. As such, a recordal of tool information may be easier and less prone to mistakes. For example, the user/operator may be able to automatically identify the rotary tool using information stored in the data member. As such, at least the identification of the rotary tool is simplified.

According to an embodiment, the present invention relates to the tool information management system as described above, wherein the data storage medium is a substantially non-volatile memory for storing data . The advantage of the substantially non-volatile memory is that long-term storage of data is possible. Thus even in a disconnected state , e.g. during maintenance, storage or transport, of the die cutting tool it is possible to store or retrieve the date relating to the die cutting tool.

According to a further embodiment, the present invention relates to the tool information management system as described above, wherein the data member further comprises a processor adapted to communicate with the data communication interface and the non-volatile memory.

In an embodiment, the present invention relates to the tool information management system as described above, wherein the data member is adapted to write data to the non-volatile memory. One advantage of this system is that critical information related to tool can be updated as necessary, including corrections to specifications, additional safety warnings, messages that a tool is subject to a lien, or that the useful life of a tool is coming to an end. Such an update would be entered into the non-volatile memory, so subsequent reader queries would yield this additional information.

In an embodiment, the present invention relates to the tool information management system as described above, further comprising a sensor adapted to gather tool information relating to the rotary tool attached to the data member. For example, the sensor may be a proximity sensor for generating a signal responsive to passage near another rotary tool or a pressure sensor. In a further embodiment, the present invention relates to the tool information management system as described above, wherein the sensor module is integrated in the data member.

In an embodiment, the present invention relates to the tool information management system as described above, wherein the data reader is coupled to a tool database that is operable to receive a signal from the data reader, the tool database having a storage medium. The tool database may be one of a cloud storage system, a network storage system or a server.

In an embodiment, the present invention relates to the tool information management system as described above, wherein the data reader is coupled to a output display that is operable to receive a signal from the data reader. The output display may be part of a computer, a smartphone or a monitor.

According to an embodiment, the present invention relates to the tool information management system as described above, wherein the data comprises identification data for identification of the rotary tool, sensor data relating to detected properties of the rotary tool, and other tool information data. For example, the identification data may comprise an ID key, the sensor data may comprise data relating to the pressure or rotational speed of the rotary tool, and the other tool information data may comprise data relating to lifetime predictions, wear analysis, maintenance, reports, ....

Moreover, the present invention relates to a rotary die cutting system comprising the tool information management system as described above.

Moreover, the present invention relates to a method of managing tool information using a tool information management system according to any one of the preceding claims, comprising the step of retrieving the data stored in the data member using the data reader. According to an embodiment, the present invention relates to the method as described above, further comprising the step of retrieving sensor data from the sensor.

According to an embodiment, the present invention relates to the method as described above, further comprising the steps of sending the retrieved data to the tool database and retrieving further data from the tool database.

According to an embodiment, the present invention relates to the method as described above, further comprising the step of analyzing the retrieved data using a processor. Optionally, the method further comprises the step of generating a tool information report containing predetermined data.

According to an embodiment, the present invention relates to the method as described above, wherein further comprising the steps of sending the retrieved data to the output display and displaying the retrieved data on the output display.

### Brief description of Drawings

The invention will be explained in more detail below with reference to drawings in which illustrative embodiments thereof are shown. They are intended exclusively for illustrative purposes and not to restrict the inventive concept, which is defined by the appended claims.
Figure 1 shows a rotary die cutting system provided with a tool information system according to this invention;
Figure 2 shows a schematic diagram illustrating major elements of a tool information management system according to a first embodiment of this invention;
Figures 3 and 4 show block diagrams illustrating major elements of a tool information management system according to respectively a second and third embodiment of this invention.

### Detailed Description of Embodiments

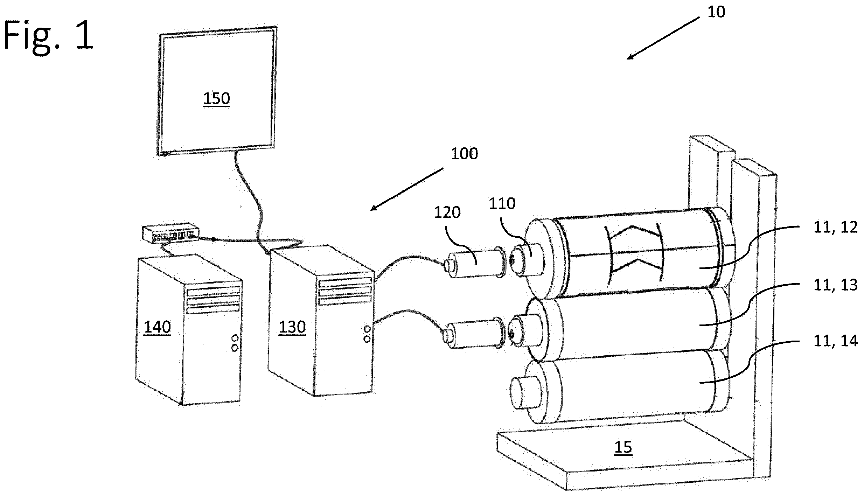

As shown in figure 1, a rotary die cutting system 10 comprises at least one rotary tool 11. For example, the at least one rotary tool 11 may be a die cutting tool 12, for use in proximity to an anvil roller 13, having a body with substantially cylindrical outer surface defining a cutting pattern extending outwardly from the surface. The die cutting tool 12, the anvil roller 13 and a support roller 14 are provided in a die station frame 15. The die cutting tool 12 and the anvil roller 13 are each mounted for rotation about their respective longitudinal axes and cooperating with one another for the die cutting of an object passing there between.

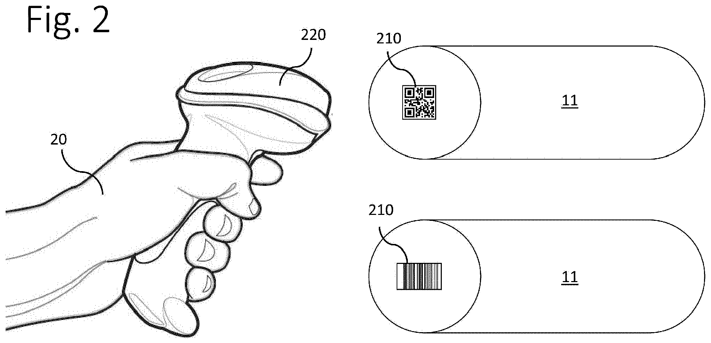

Figures 2, 3 and 4 show embodiments of a tool information management system 100; 200; 300; 400 for a rotary die cutting system 10. The tool information management system 100 comprises a data member 110, e.g. in the form of a tag or a label, preferably an electronical readable identification tag. The data member 110 may be provided at a longitudinal end of the rotary tool 11, as shown in figure 1.

The data member 110 comprises a data storage medium and a data communication interface adapted for communication with a data reader 120. The connection to the data communication interface is preferably selected from the group consisting of a physical connection, a radio frequency link and a coded optical link. A physical connection is preferred for lower fabrication costs. Wireless connections via radio-frequency or infrared are preferred for ease-of-use. Preferably, the data member 110 is a RFID-tag adapted to receive power and transmit information when embedded in a metal surface and the data reader is a RFID-reader.

The tool information management system 100 may further comprise a processor 130 adapted to communicate with the data reader 120 for displaying the stored information on an output display 150 and/or for communicating with an external tool database 140, e.g. a server. The processor 130 may be a simple microprocessor in a programmable logic controller (PLC) or a more elaborate processor, such as a personal computer (PC).

In a first embodiment of the tool information management system 200, shown in figure 2, the data member 210 comprising the data storage medium and the data communication interface is formed by machine-readable representation of data, e.g. a bar code, a QR code or a UPC code, suitable for automatically identification of the corresponding rotary tool 11, such as a rotary die 12 or an anvil roller 13.

The data reader 220 may be an optical and/or electronic device for reading the machine-readable representation of data. In one example, the data reader consists of a light source, a lens and a light sensor translating optical impulses into electrical signals. Other embodiments of the data reader include the ability to transmit and receive data from a radio-frequency identification (RFID) tag using wireless technology. Optionally, the data reader contains decoder circuitry analyzing the image data provided by the light sensor. A user/operator 20 wanting critical information related to the rotary tool would use the data reader 220 to scan the representation of data 210. The data reader 220 can be a variety of devices including a designated scanner, such as a conventional fixed light and photosensor device (not shown), or a so called "smart phone" with the appropriate application.

The first embodiment may for example be used in "Automatic Identification and Data Capture" (AIDC). AIDC refers to the methods of automatically identifying objects, collecting data about them, and entering that data directly into computer systems (i.e. without human involvement).

A method of managing tool information using the tool information management system 200 according to the first embodiment comprises the following steps, it will be appreciated that more or fewer steps may be utilized:
Step 1. Reading the machine-readable representation of data 210 attached to the rotary tool 11 using the data reader 220.
Step 2. Transmitting a query from the data reader 220 to a processor for information linked to the machine-readable representation of data 210. The processor is either located in close physical association with the data reader 220 or is in electronic communication with the data reader 220 via a commercial computer wired or wireless network or cabling system.
Step 3. Retrieving information linked to the machine-readable representation of data 210 from the tool database 130 by analyzing the data entered into the database, the data maybe, but is not limited to, the tool's serial number or other unique identifying number associated with only that tool.
Step 4. Displaying the retrieved information on the output display 140 where the data can be reviewed by the user/operator 20.

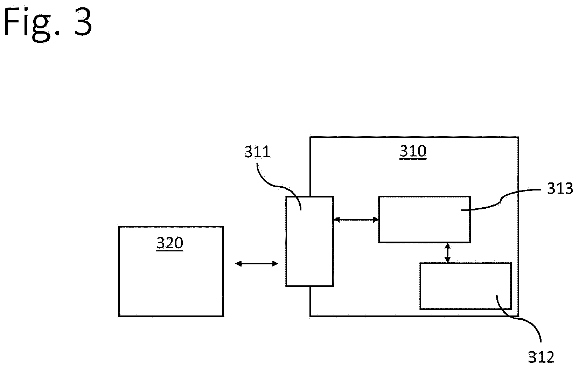

Referring to figure 3, an overall block diagram of the tool information management system, generally designated 300, in accordance with a second embodiment of the invention is shown. A single block or cell may indicate several individual components and/or circuits that collectively perform a single function. Likewise, a single line may represent several individual signals or energy transmission paths for performing a particular operation.

In the second embodiment of the tool information management system 300, the data storage medium is a substantially non-volatile memory 312 for storing data, the memory 312 may contain tool specific information, such as data relating to identification, to past usage, to financial information, etc.. The data member 310 further comprises a data member processor 313 for two-way communication with the communication interface 311 and for communication with the non-volatile memory 312 such as a flash memory, preferably for two-way communication, i.e. read/write.

A method of managing tool information using the tool information management system 300 according to the second embodiment comprises the following steps, it will be appreciated that more or fewer steps may be utilized:
Step 1. Retrieving tool information data 1000 of the rotary tool 11 from the data member 310 using the data reader 320. The tool information data 1000 may comprise, but is not limited to, the tool's serial number or other unique identifying number associated with only that tool, the tool's date of manufacture, warranty information, authenticity of the tool, tool setup information, lien information on the tool, contract/license information, design information, special use instructions, tool maintenance instructions, history of the tool, etc. It should be noted that this list of data fields are merely examples and it is not presented in this application as a limiting set of data fields.
Step 2. Transmitting a query to a processor for information related to the rotary tool 11. The processor is either located in close physical association with the data reader 220 or is in electronic communication with the data reader 220 via a commercial computer wired or wireless network or cabling system.
Step 3. Retrieving database information date 1100 linked to the rotary tool 11 from the tool database 130 by analyzing the tool identification date 1010 of the tool information data 1000 entered into the tool database 130.
Step 4. Processing the tool information data 1000 and/or the database information date 1100 by running predetermined algorithms.
Step 5. Displaying predetermined information contained in the tool information data 1000, database information data 1100 and/or processed data on the output display 140 where the data can be reviewed by the user/operator 20.

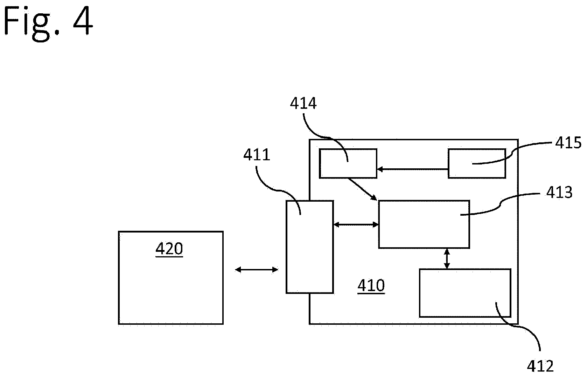

Referring to figure 4, an overall block diagram of the tool information management system, generally designated 400, in accordance with a second embodiment of the invention is shown. A single block or cell may indicate several individual components and/or circuits that collectively perform a single function. Likewise, a single line may represent several individual signals or energy transmission paths for performing a particular operation.

In the third embodiment of the tool information management system 400, the data member of the second embodiment further comprises at least one sensor 414 for detecting events or changes in the environment of the data member 410 and sending the information to the data member processor 413, and optionally a power source 415 for powering at least the sensor 414. The power source 415 preferably takes the form of an extended life battery such as 3 volt lithium ion cell. In an alternate embodiment, power source 415 includes an inertial micro-scale generator driven by vibration or rotational energy available as the rotary tool 11 is rotated. Such an energy scavenging generator extends storage life for the sensor function.

A method of managing tool information using the tool information management system 400 according to the third embodiment comprises the steps of the method of managing tool information using the tool information management system according to the second embodiment and the following step:
Retrieving sensor information data 1200 linked to the rotary tool 11 from the sensor 414 using the data reader 320.

Other alternatives and equivalent embodiments of the present invention are conceivable within the idea of the invention, as will be clear to the person skilled in the art. The scope of the invention is limited only by the appended claims.

### List of reference signs

- 10.: Die cutting System
- 11.: Rotary Tool
- 12.: Die cutting Tool
- 13.: Anvil Roller
- 14.: Support Roller
- 15.: Frame

- 100, 200, 300, 400.: Tool Information Management System
- 110,210,310,410.: Data Member
- 311, 411.: Data Storage Medium
- 312, 412.: Data Interface
- 313,413.: Data Member Processor
- 414.: Sensor
- 415.: Power Source
- 120.: Data Reader
- 130: Processor
- 140.: Tool Database
- 150.: Display

- 1000.: Tool Information Data
- 1100.: Database Information Data
- 1200.: Sensor Information Data

## Claims

1. Tool information management system (100; 200; 300; 400) for a rotary die cutting system (10) having at least one rotary tool (11), the at least one rotary tool comprising a die cutting tool (12), for use in proximity to an anvil roller (13), having a body with substantially cylindrical outer surface defining a cutting pattern extending outwardly from the surface, comprising:
a data member (110; 210; 310; 410) that is fixably attached to a rotary tool (11) of the rotary die cutting system (10), comprising a data storage medium (311; 411) for storing data and a data communication interface (312; 412), and
a data reader (120, 220; 320; 420) adapted to communicate with the data communication interface (312; 412) of the data member (110; 210; 310; 410), and adapted to retrieve the data stored in the data storage medium (311; 411) of the data member (110; 210; 310; 410).

2. Tool information management system according to claim 1, wherein the data storage medium (311; 411) is a substantially non-volatile memory.

3. Tool information management system according to claim 2, wherein the data member further comprises a processor (313, 413) adapted to communicate with the data communication interface (312; 412) and the non-volatile memory.

4. Tool information management system according to claim 2 or claim 3, wherein the data member (110; 210; 310; 410) is adapted to write data to the non-volatile memory.

5. Tool information management system according to any one of the preceding claims, further comprising a sensor (414) adapted to gather tool information data (1000) relating to the rotary tool (11) attached to the data member (110; 210; 310; 410).

6. Tool information management system according to claim 5, wherein the sensor (414) is integrated in the data member (110; 210; 310; 410).

7. Tool information management system according to any one of the preceding claims, wherein the data reader (120, 220; 320; 420) is coupled to a tool database (130) that is adapted to communicate with the data reader (120, 220; 320; 420) by sending and/or receiving signals.

8. Tool information management system according to any one of the preceding claims, wherein the tool database (130) is one of a cloud storage system, a network storage system, or a server.

9. Tool information management system according to any one of the preceding claims, wherein the data reader (120, 220; 320; 420) is coupled to an output display (140) that is adapted to receive a signal from the data reader (120, 220; 320; 420) and adapted to display the tool information that is contained in the received signal.

10. Tool information management system according to anyone of the preceding claims, wherein the output display is one of a screen or a monitor.

11. Tool information management system according to any one of the preceding claims, wherein the data communication interface (312; 412) and the data reader (120, 220; 320; 420) are adapted for wireless communication with each other.

12. Tool information management system according to claim 11, wherein the data communication interface (312; 412) and the data reader (120, 220; 320; 420) are adapted for radio-frequency identification (RFID) communication with each other.

13. Tool information management system according to claim 12, wherein the data member (110, 210; 310; 410) is a RFID-tag adapted to receive power and transmit information when embedded in a metal surface and the data reader (120, 220; 320; 420) is a RFID-reader.

14. Tool information management system according to claim 12 or claim 13, wherein the data communication interface (312; 412) and the data reader (120, 220; 320; 420) are adapted for near field communication (NFC) with each other.

15. Tool information management system according to any one of the preceding claims, wherein the data member (110; 210; 310; 410) is adapted to store:
identification data for identification of the rotary tool,
sensor data relating to detected properties of the rotary tool, and
other tool information data.

16. Rotary die cutting system (10) comprising a tool information management system (100; 200; 300; 400) according to any one of the preceding claims.

17. Method of managing tool information using a tool information management system (100; 200; 300; 400) according to any one of the preceding claims, comprising the step of:
- retrieving the data stored in the data member (110; 210; 310; 410) using the data reader (120; 220; 320; 420).

18. Method according to claim 16 using a tool information management system (100; 200; 300; 400) according to claim 5, further comprising the step of:
- retrieving sensor data from the sensor (415).

19. Method according to claim 16 using a tool information management system according to claim 7, further comprising the steps of:
- sending the retrieved data to the tool database (140), and
- retrieving further data from the tool database (140).

20. Method according to claim 16 using a tool information management system according to claim 3, further comprising the step of:
- analyzing the retrieved data using a processor (130), and
- optionally, generating a tool information report containing predetermined data.

21. Method according to claim 16 using a tool information management system according to claim 9, further comprising the steps of:
- sending the retrieved data to the output display (150), and
- displaying the retrieved data on the output display (150).
